(19) Europäisches Patentamt
European Patent Office
Office européen des brevets

(11) **EP 4 641 451 A1**

(12) **EUROPEAN PATENT APPLICATION**

(43) Date of publication:
**29.10.2025 Bulletin 2025/44**

(21) Application number: **25157165.9**

(22) Date of filing: **11.02.2025**

(51) International Patent Classification (IPC):
**G06N 10/20** $^{(2022.01)}$   **G06N 10/60** $^{(2022.01)}$

(52) Cooperative Patent Classification (CPC):
**G06N 10/20; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2024 JP 2024071981**

(71) Applicant: **Fujitsu Limited**
**Kawasaki-shi, Kanagawa 211-8588 (JP)**

(72) Inventors:
• **CHINZEI, Koki**
  **Kawasaki-shi, 211-8588 (JP)**
• **YAMANO, Shinichiro**
  **Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57)    An information processing program for causing a computer to execute processing includes acquiring a first Pauli operator set that is a set of first Pauli operators formed by a product of a plurality of Pauli operators that is mutually commutative and independent, for a qubit related to a target problem, generating a symmetric circuit that includes only a first rotation gate that includes a first generator that is commutative with the first Pauli operator, regarding each first Pauli operator of the first Pauli operator set and is commutative with all the first Pauli operators of the first Pauli operator set, and determining a commuting block circuit that is formed by a plurality of blocks so that each second rotation gate of a plurality of second rotation gates included in each block of the specified number of multiple blocks includes a second generator formed by a product of any one of the first Pauli operators of the acquired first Pauli operator set and the first generator included in the any one first rotation gate selected for each block, in the generated symmetric circuit.

FIG. 1

## Description

FIELD

The embodiment discussed herein is related to an information processing program, an information processing method, and an information processing device.

BACKGROUND

Typically, there is a variational quantum algorithm for solving a target problem by optimizing a parameter of a prescribed quantum circuit representing a cost function using a variational method. The optimization is implemented by, for example, a gradient method of measuring a gradient of the cost function and updating the parameter. As a representative variational quantum model, for example, there is a hardware efficiency ansatz or the like. However, in these variational quantum models, a large processing cost is needed for gradient measurement when the parameter is updated.

As related art for improving efficiency of the gradient measurement, for example, there is a commuting block circuit. The commuting block circuit is a variational quantum model that can simultaneously measure differentials for a plurality of parameters using commutativity of some quantum operations. It is desirable to reduce a processing cost when the parameter is optimized by the commuting block circuit. Furthermore, for example, there is a technology for determining a value for each processing for updating a coefficient used for processing for updating a value of a parameter to be applied to a variational quantum circuit used for variational quantum eigensolver (VQE) calculation, as a value that periodically changes to a higher value or a lower value than a predetermined reference value, with an increase in the number of times of update. Furthermore, for example, there is a technology for determining whether or not to implement a circuit corresponding to electron excitation, according to whether or not an initial value of a variable corresponding to the electron excitation is equal to or more than a predetermined threshold, for each of the plurality of electron excitations. Furthermore, for example, there is a technology for changing a first rotation angle applied to a rotation operation in a first quantum circuit for generating a wave function that expresses an electron trajectory of a molecule according to a second rotation angle applied to a partial circuit that indicates a rotation operation in a second quantum circuit for transforming a base of the wave function. Furthermore, for example, there is a technology, by a device, for implementing a quantum circuit that is configured to simulate a boundary operator that creates a mapping of a boundary of a predetermined graph having nodes. Furthermore, for example, there is a technology for generating a quantum circuit from a unitary coupled cluster ansatz. Furthermore, for example, there is a technology for implementing a unitary quantum gate over one or more qubits.

Citation List

Patent Document

International Publication Pamphlet No. WO 2023/243011
International Publication Pamphlet No. WO 2023/175703
International Publication Pamphlet No. WO 2023/148806
U.S. Patent Application Publication No. 2024/0037304
U.S. Patent Application Publication No. 2023/0237361
U.S. Patent Application Publication No. 2020/0364602

SUMMARY OF INVENTION

TECHNICAL PROBLEM

However, there is a problem in the related art that it is difficult to implement a commuting block circuit for facilitating measurement of a gradient of a cost function.

In one aspect, an object of the embodiment is to enable implementation of a commuting block circuit.

SOLUTION TO PROBLEM

According to an aspect of the embodiments, an information processing program for causing a computer to execute processing includes acquiring a first Pauli operator set that is a set of first Pauli operators formed by a product of a plurality of Pauli operators that is mutually commutative and independent, for a qubit related to a target problem, generating a symmetric circuit that includes only a first rotation gate that includes a first generator that is commutative with the first Pauli operator, regarding each first Pauli operator of the first Pauli operator set and is commutative with all the first Pauli operators of the first Pauli operator set, and determining a commuting block circuit that is formed by a plurality of blocks so that each second rotation gate of a plurality of second rotation gates included in each block of the specified number of multiple blocks includes a second generator formed by a product of any one of the first Pauli operators of the acquired first Pauli operator set and the first generator included in the any one first rotation gate selected for each block, in the generated symmetric circuit.

ADVANTAGEOUS EFFECTS OF INVENTION

According to one aspect, it is possible to enable implementation of a commuting block circuit.

BRIEF DESCRIPTION OF DRAWINGS

FIG. 1 is an explanatory diagram illustrating an example of an information processing method according to an embodiment;
FIG. 2 is an explanatory diagram illustrating an example of an information processing system 200;
FIG. 3 is a block diagram illustrating a hardware configuration example of an information processing device 100;
FIG. 4 is a block diagram illustrating a hardware configuration example of a calculation device 201;
FIG. 5 is a block diagram illustrating a functional configuration example of the information processing device 100;
FIG. 6 is an explanatory diagram illustrating a principle of determining a commuting block circuit;
FIG. 7 is an explanatory diagram illustrating an example of determining a commuting block circuit 710;
FIG. 8 is an explanatory diagram (part 1) illustrating a specific example of determining a commuting block circuit 900;
FIG. 9 is an explanatory diagram (part 2) illustrating a specific example of determining the commuting block circuit 900;
FIG. 10 is an explanatory diagram (part 1) illustrating an example of an effect by the information processing device 100;
FIG. 11 is an explanatory diagram (part 2) illustrating an example of the effect by the information processing device 100;
FIG. 12 is a flowchart illustrating an example of an overall processing procedure; and
FIG. 13 is a flowchart illustrating an example of a design processing procedure.

DESCRIPTION OF EMBODIMENTS

Hereinafter, an embodiment of an information processing program, an information processing method, and an information processing device will be described in detail with reference to the drawings.

(Example of Information Processing Method According to Embodiment)

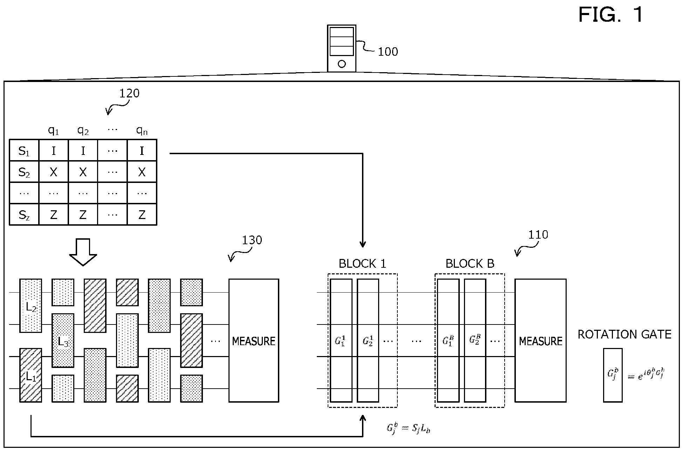

FIG. 1 is an explanatory diagram illustrating one example of the information processing method according to the embodiment. An information processing device 100 is a computer for determining a specific content of a commuting block circuit. The information processing device 100 is, for example, a server, a personal computer (PC), or the like. The commuting block circuit is a quantum circuit.

Typically, there is a quantum computer that executes a quantum circuit. The quantum computer is a computer using a principle of quantum mechanics, and is expected to solve a specific problem at high speed by using a quantum superposition state. The specific problem is, for example, prime factorization, a search problem, quantum dynamics calculation, or the like. The quantum computer is expected to be applied to, for example, fields such as drug discovery, material development, or finance.

Here, there is a variational quantum algorithm as one of algorithms for solving the specific problem based on a quantum circuit. Specifically, it is conceivable that a quantum computer and a classical computer cooperate with each other, and solve a target problem by optimizing a parameter of a prescribed quantum circuit representing a cost function using a variational method. The parameter is, for example, a set value related to a quantum gate of the quantum circuit. The quantum gate is, for example, a rotation gate. Specifically, the parameter corresponds to a rotation angle of the rotation gate.

The optimization is implemented by, for example, a gradient method of repeating a series of processing for measuring a gradient of the cost function and updating the parameter. The gradient measurement is performed, for example, by the quantum computer. The update is executed, for example, by the classical computer. The variational quantum algorithm is applied to, for example, quantum chemical calculation, material calculation, quantum machine learning, quantum combinatorial optimization, or the like.

Here, since a processing cost for the gradient measurement is proportional to the number of parameters, as a scale of the problem increases and the number of parameters increases, it tends to be more difficult to solve the problem by the variational quantum algorithm. Specifically, as the scale of the problem increases and the number of parameters increases, a processing load, a processing time, a memory usage, and the like at the time of optimization of the parameters tend to increase, and it is not possible to solve the problem within a practical time.

Thus, it is desirable to facilitate the measurement of the gradient of the cost function and to reduce the processing cost at the time of the optimization of the parameter by adopting a quantum circuit referred to as a commuting block circuit for the prescribed quantum circuit representing the cost function. The commuting block circuit includes a plurality of blocks. The block includes a quantum gate. The quantum gate is, for example, a rotation gate representing a rotation operation on a qubit with reference to an X axis, a Y axis, a Z axis, or the like. Specifically, the block includes a rotation gate having a generator that is a Pauli operator. Specifically, the parameter corresponds to a rotation angle of the rotation gate.

Specifically, the commuting block circuit is a quantum circuit that satisfies a specific condition. Specifically, the commuting block circuit has a first condition that generators of different rotation gates included in the same block are all mutually commutative. Specifically, the commuting block circuit has a second condition that a generator of a rotation gate included in one block and a generator of a rotation gate included in another block are all commutative or all anticommutative, in any set of different blocks.

According to the commuting block circuit, it is conceivable that the measurement of the gradient of the cost function may be facilitated. In the commuting block circuit, when a differential for the parameter of the rotation gate is measured in order to measure the gradient of the cost function, a base transformation operation is performed on each qubit, and it is desirable to prepare a base transformation circuit.

For example, according to the commuting block circuit, it is conceivable that it is possible to enable, in a last block, measurement of the differential for the parameter of the rotation gate by one type of quantum circuit including the base transformation circuit. For example, according to the commuting block circuit, it is conceivable that it is possible to enable, in a block other than the last block, measurement of the differential for the parameter of the rotation gate by two types of quantum circuits each including the base transformation circuit.

Therefore, according to the commuting block circuit, when one or two types of quantum circuits including the base transformation circuit are prepared for each block, it is possible to measure the differential for the parameter of the rotation gate and to facilitate the measurement of the gradient of the cost function. Regarding the commuting block circuit, specifically, Reference Document 1 below may be referred to.

Reference Document 1: Bowles, Joseph, David Wierichs, and Chae-Yeun Park. "Backpropagation scaling in parameterised quantum circuits." arXiv preprint arXiv:2306.14962 (2023).

However, typically, there is a problem that it is difficult to implement the commuting block circuit for facilitating the measurement of the gradient of the cost function. Specifically, it is not possible to determine what type of quantum gate each block needs to include so as to satisfy the first condition and the second condition, and it is not possible to determine the commuting block circuit.

Therefore, in the present embodiment, an information processing method that enables implementation of a commuting block circuit will be described.

In the following description, for convenience, a character a to which a subscript b is attached or the like may be referred to as "a_b". Furthermore, a character a to which a superscript c is attached or the like may be referred to as "a^c". Furthermore, a character a to which the subscript b and the superscript c are attached or the like may be referred to as "a_b^c".

In FIG. 1, the information processing device 100 determines a specific content of a commuting block circuit 110 to enable implementation of the commuting block circuit 110. As illustrated in FIG. 1, the commuting block circuit 110 includes B blocks. The block includes d_b quantum gates. Specifically, the quantum gate is the rotation gate. A j-th quantum gate included in a b-th block specifically has a generator $G\_j^b$ (j = 1, 2, ..., and d_b) that is a Pauli operator. The j-th quantum gate included in the b-th block specifically represents a rotation operation indicated by $e^{\wedge}(i\theta\_j^b G\_j^b)$ on a qubit.

Furthermore, a unitary operator U of the entire quantum circuit is defined by the following formula (1). A unitary operator U_b of the b-th block is defined by the following formula (2). The commuting block circuit 110 has the first condition that the generators of the different quantum gates included in the same block are all mutually commutative. Therefore, it is desirable that the following formula (3) be satisfied, for the commuting block circuit 110. The commuting block circuit 110 has the second condition that the generator of the quantum gate included in the one block and the generator of the quantum gate included in the another block are all commutative or all anticommutative, in any set of different blocks. Therefore, it is desirable that the following formula (4) or (5) be satisfied, for the commuting block circuit 110.

[Expression 1]

$$U = \prod_{b=1}^{B} U_b \quad \ldots (1)$$

[Expression 2]

$$U_b = \prod_{j=1}^{d_b} e^{i\theta_j^b G_j^b} \quad \ldots (2)$$

[Expression 3]

$$\left[ G_j^b, G_{j'}^b \right] = 0 \quad \ldots (3)$$

[Expression 4]

$$\left[ G_j^b, G_{j'}^c \right] = 0 \; \forall j, j' \quad \ldots (4)$$

[Expression 5]

$$\left\{ G_j^b, G_{j'}^c \right\} = 0 \; \forall j, j' \quad \ldots (5)$$

Hereinafter, how the information processing device 100 determines the generator $G\_j^b$ included in the quantum gate included in each block, and how the information processing device 100 determines the specific content of the commuting block circuit 110 will be specifically described with reference to FIG. 1.

In FIG. 1, the information processing device 100 stores information related to a target problem. The information processing device 100 stores, for example, the total number n of qubits related to the target problem. For example, the information processing device 100 stores an index used to identify each qubit of the n qubits related to the target problem. In the example of FIG. 1, specifically, the indices are $q\_1$, $q\_2$, ..., and $q\_n$.

The information processing device 100 receives designation of the number B of blocks forming the commuting block circuit 110. For example, the information processing device 100 receives the designation of the number B of blocks forming the commuting block circuit 110, based on a user's operation input.

(1-1) The information processing device 100 acquires a first Pauli operator set 120 that is a set of first Pauli operators $S\_x$ for the n qubits related to the target problem. Specifically, the first Pauli operator $S\_x$ is formed by a product of a plurality of Pauli operators that is mutually commutative and independent for the qubit related to the target problem. For example, the Pauli operator represents to cause an X operator, a Y operator, a Z operator, an I operator, or the like act on one qubit. The I operator is an identity operator. The reference x is, for example, 1, 2, ..., and $2^s$.

The information processing device 100 may acquire the first Pauli operator set 120 that is a set of first Pauli operators $S\_x$ less than $2^s$, according to the target problem. For example, in a case where the target problem relates to a substance having Pauli symmetry, the information processing device 100 may acquire a first Pauli operator $S\_j$ that is a symmetry operator. Specifically, in the example in FIG. 1, the information processing device 100 acquires the first Pauli operator set 120 that is a set of $S\_1 = IIII$, $S\_2 = XXXX$, $S\_3 = YYYY$, and $S\_4 = ZZZZ$, each of which is a symmetry operator.

(1-2) The information processing device 100 generates a symmetric circuit 130 that is commutative with all the first Pauli operators $S\_x$ of the first Pauli operator set 120. For example, the symmetric circuit 130 includes only a first rotation gate including a first generator $L\_y$ that is commutative with the first Pauli operator $S\_x$, with respect to each first Pauli operator $S\_x$ of the first Pauli operator set 120. Specifically, regarding a method for generating the symmetric circuit 130, the following Reference Document 2 may be referred.

Reference Document 2: Gard, Bryan T., et al. "Efficient symmetry-preserving state preparation circuits for the variational quantum eigensolver algorithm." npj Quantum Information 6.1 (2020): 10.

(1-3) The information processing device 100 determines a second generator $G\_j{}^b$ corresponding to each second rotation gate of $d\_b$ second rotation gates included in each block of the B blocks, based on the first Pauli operator set 120 and the symmetric circuit 130. The second generator $G\_j{}^b$ represents a content of an operation on the qubit.

For example, the information processing device 100 selects any one of the first Pauli operators $S\_x$ of the first Pauli operator set 120, for the second rotation gate, in each block. Specifically, the information processing device 100 selects any one of the first Pauli operators $S\_x$ different for each second rotation gate, in the first Pauli operator set 120, in each block. More specifically, the information processing device 100 selects a j-th first Pauli operator $S\_j$ for a j-th second rotation gate, among the first Pauli operator set 120, in each block. Here, for example, the information processing device 100 does not need to select all the first Pauli operators $S\_x$ of the first Pauli operator set 120, in each block.

For example, the information processing device 100 selects the first generator $L\_y$ included in any one of the first rotation gates of the symmetric circuit 130, for each block. Specifically, the information processing device 100 selects the first generator $L\_y$ included in any one of the first rotation gates different for each block, in the symmetric circuit 130, for each block. More specifically, the information processing device 100 selects a first generator $L\_b$ included in a b-th first rotation gate, among the symmetric circuit 130, for a b-th block. Here, for example, there may be a case where the information processing device 100 selects the first generator $L\_b$ included in the same first rotation gate, for different blocks.

The information processing device 100 determines the second generator $G\_j{}^b$ formed by a product of the selected first Pauli operator $S\_x$ and the selected first generator $L\_y$, for the j-th second rotation gate included in the b-th block. Hereinafter, a subscript b for the generator may be omitted for simplification. In the example in FIG. 1, specifically, the information processing device 100 determines the generator $G\_j{}^b$ formed by a product of the j-th first Pauli operator $S\_j$ and the first generator $L\_b$ included in the b-th first rotation gate, for the j-th second rotation gate included in the b-th block.

The information processing device 100 determines the commuting block circuit 110 formed by the B blocks, so that each second rotation gate included in each block includes the determined second generator. As a result, the information processing device 100 may appropriately determine the second generator included in the second rotation gate included in each block, so as to satisfy the first condition and the second condition described above and may appropriately determine the specific content of the commuting block circuit 110.

Therefore, the information processing device 100 may enable the implementation of the commuting block circuit 110, and may facilitate the measurement of the gradient of the cost function. The information processing device 100 may reduce the processing cost at the time of the optimization of the parameter, and may facilitate solving of the problem within the practical time. The processing cost is a processing load, a processing time, a memory usage, or the like. For example, the cost function is defined by the following formula (6), when a physical quantity to be measured is set to a Pauli operator P and an initial quantum state is set to $| \varphi\_0 >$.

[Expression 6]

$$C = \langle \phi_0 | U^\dagger P U | \phi_0 \rangle \quad ...(6)$$

Here, a parameter of which a generator is commutative or anticommutative with the physical quantity P can be simultaneously measured, by an auxiliary qubit, in each block other than the last block. Furthermore, in the last block, the parameter of which the generator is commutative with the physical quantity P does not need to be measured. Therefore, if the information processing device 100 executes (2B-1) types of quantum circuits, for the commuting block circuit 110, the information processing device 100 enables to measure the gradient of the cost function and can reduce the processing cost at the time of the optimization of the parameter.

Here, a case where a function as the information processing device 100 is implemented by a single computer has been described. However, the embodiment is not limited to this. For example, the function as the information processing device 100 may be implemented by cooperation of a plurality of computers in some cases. For example, there may be a case where the function as the information processing device 100 is implemented on a cloud.

(Example of Information Processing System 200)

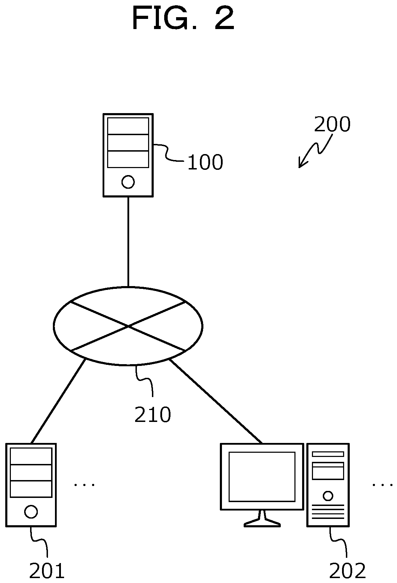

Next, an example of an information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100, a calculation device 201, and a client device 202.

In the information processing system 200, the information processing device 100 and the calculation device 201 are coupled via a wired or wireless network 210. The network 210 is, for example, a local area network (LAN), a wide area network (WAN), the Internet, or the like. Furthermore, in the information processing system 200, the information processing device 100 and the client device 202 are coupled via the wired or wireless network 210.

The information processing device 100 is a computer for determining a commuting block circuit. The information processing device 100 acquires, for example, a processing request for requesting to solve the target problem. The processing request includes, for example, information related to the target problem. Specifically, the information processing device 100 acquires the processing request by receiving the processing request from another computer. The another computer is, for example, the client device 202 or the like. Specifically, the information processing device 100 may acquire the processing request by receiving an input of the processing request based on a user's operation input.

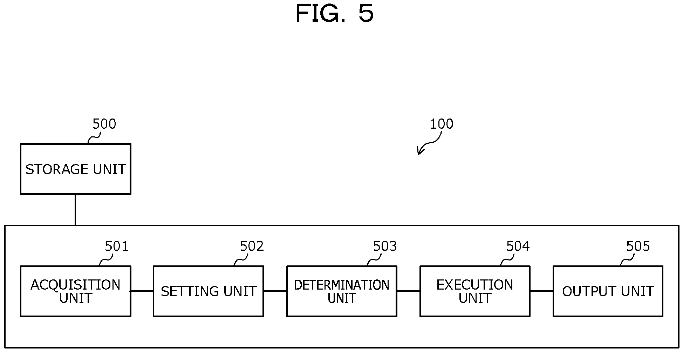

In response to the processing request, the information processing device 100 determines a commuting block circuit to be used when the target problem is solved. A specific example in which the information processing device 100 determines the commuting block circuit will be described later with reference to FIGs. 5 to 11. Furthermore, the information processing device 100 may further determine the base transformation circuit for the block forming the determined commuting block circuit. The information processing device 100 transmits the determined commuting block circuit and the determined base transformation circuit to the calculation device 201. The information processing device 100 acquires a result of solving the target problem, by solving the target problem, according to the variational quantum algorithm, in cooperation with the calculation device 201.

The information processing device 100 outputs the result of solving the target problem. For example, the information processing device 100 transmits the result of solving the target problem, to another computer. The another computer is, for example, the client device 202 or the like. For example, the information processing device 100 may output the result of solving the target problem, so that a user may refer to the result. As a result, the information processing device 100 can make the result of solving the target problem be available from outside. The information processing device 100 is a server, a PC, or the like, for example.

The calculation device 201 is a computer that executes quantum calculation. The calculation device 201 receives the commuting block circuit and the base transformation circuit from the information processing device 100. The calculation device 201 implements the received commuting block circuit and base transformation circuit. In cooperation with the information processing device 100, the calculation device 201 solves the target problem by using the implemented commuting block circuit and base transformation circuit in accordance with the variational quantum algorithm. For example, a case is conceivable where the calculation device 201 is a classical computer that activates a quantum simulator. In this case, the calculation device 201 is, for example, a server, a PC, or the like. Furthermore, for example, a case is conceivable where the calculation device 201 is an actual machine of the quantum computer.

The client device 202 is a computer used by a user who desires to solve the target problem. The client device 202 generates the processing request for requesting to solve the target problem based on the user's operation input, and transmits the processing request to the information processing device 100. The client device 202 receives the result of solving the target problem from the information processing device 100. The client device 202 outputs the result of solving the target problem, so that the user may refer to the result. The client device 202 is, for example, a PC, a tablet terminal, a smartphone, or the like.

Here, a case has been described where the information processing device 100 and the calculation device 201 are different devices. However, the embodiment is not limited to this. For example, the information processing device 100 may have a function as the calculation device 201, and may also operate as the calculation device 201. Furthermore, a case has been described where the information processing device 100 and the client device 202 are different devices. However, the embodiment is not limited to this. For example, the information processing device 100 may have a function as the client device 202, and may also operate as the client device 202.

(Hardware Configuration Example of Information Processing Device 100)

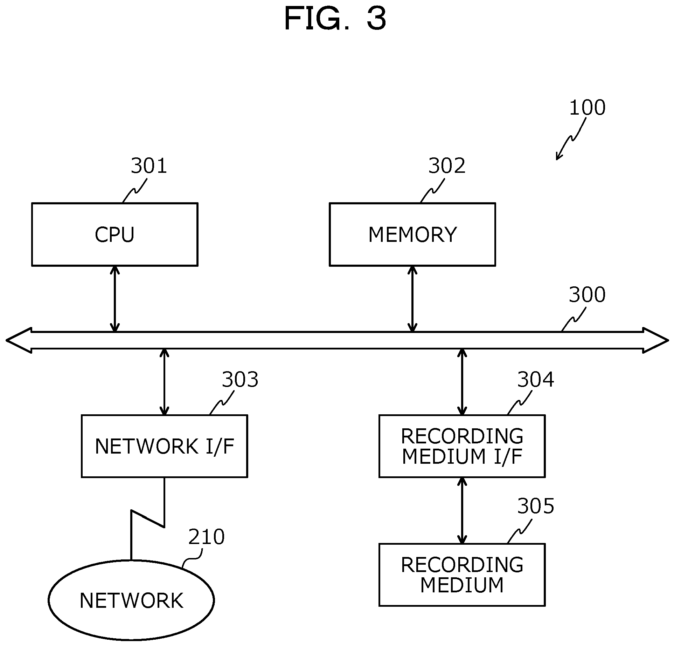

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network Interface (I/F) 303, a recording medium I/F 304, and a recording medium 305. Furthermore, the individual components are coupled to each other with a bus 300.

Here, the CPU 301 performs overall control of the information processing device 100. The memory 302 includes a read only memory (ROM), a random access memory (RAM), a flash ROM, and the like, for example. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line and is coupled to another computer via the network 210. Then, the network I/F 303 takes control of an interface between the network 210 and the inside and controls input and output of data to and from another computer. For example, the network I/F 303 is a modem, a LAN adapter, or the like.

The recording medium I/F 304 controls reading and writing of data from and to the recording medium 305 under the control of the CPU 301. For example, the recording medium I/F 304 is a disk drive, a solid state drive (SSD), a universal serial bus (USB) port, or the like. The recording medium 305 is a nonvolatile memory that stores data written under the control of the recording medium I/F 304. For example, the recording medium 305 is a disk, a semiconductor memory, a USB memory, or the like. The recording medium 305 may be attachable to and detachable from the information processing device 100.

For example, the information processing device 100 may include a keyboard, a mouse, a display, a printer, a scanner, a microphone, a speaker, or the like, in addition to the components described above. In addition, the information processing device 100 may include a plurality of the recording medium I/Fs 304 and a plurality of the recording media 305. Furthermore, the information processing device 100 does not have to include the recording medium I/F 304 or the recording medium 305.

(Hardware Configuration Example of Calculation Device 201)

Since a hardware configuration example of the calculation device 201 in a case where the calculation device 201 is a classical computer that activates the quantum simulator is specifically similar to the hardware configuration example of the information processing device 100 illustrated in FIG. 3, description thereof will be omitted.

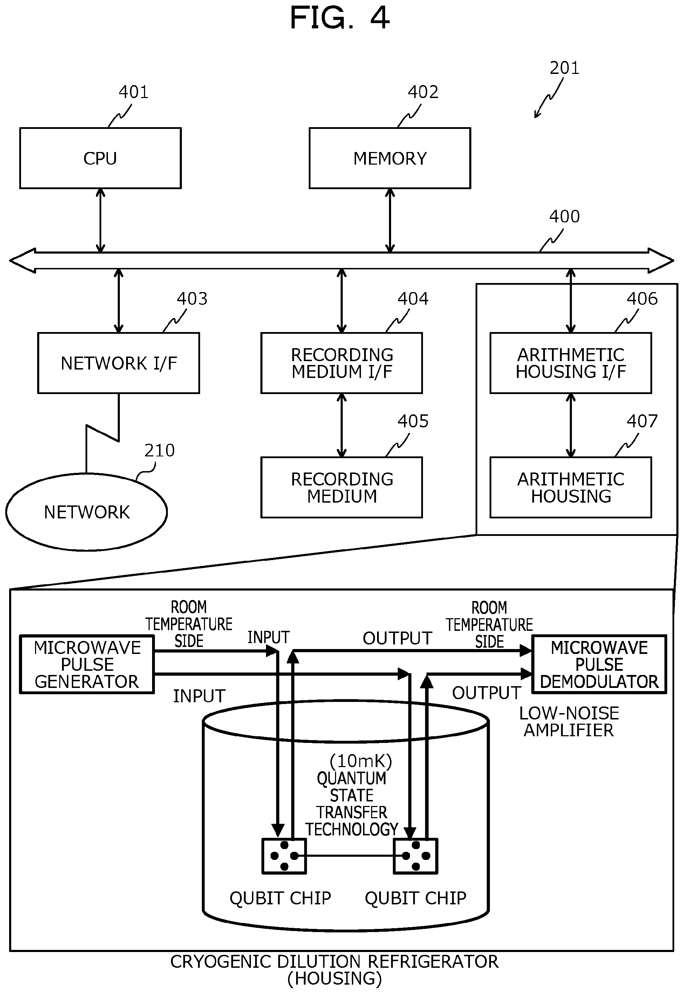

On the other hand, a case is conceivable where the calculation device 201 is an actual machine of the quantum computer. Here, a hardware configuration example of the calculation device 201 in a case where the calculation device 201 is the actual machine of the quantum computer will be described with reference to FIG. 4.

FIG. 4 is a block diagram illustrating the hardware configuration example of the calculation device 201. In FIG. 4, the calculation device 201 includes a CPU 401, a memory 402, a network I/F 403, a recording medium I/F 404, and a recording medium 405. The calculation device 201 further includes an arithmetic housing I/F 406 and an arithmetic housing 407. Furthermore, the individual components are coupled to each other by a bus 400.

Here, the CPU 401 performs overall control of the calculation device 201. The memory 402 includes, for example, a ROM, a RAM, a flash ROM, and the like. Specifically, for example, the flash ROM or the ROM stores various programs, and the RAM is used as a work area for the CPU 401. The programs stored in the memory 402 are loaded into the CPU 401 to cause the CPU 401 to execute coded processing.

The network I/F 403 is coupled to the network 210 through a communication line, and is coupled to another computer via the network 210. Then, the network I/F 403 takes control of an interface between the network 210 and the inside, and controls input and output of data to and from the another computer. The network I/F 403 is, for example, a modem, a LAN adapter, or the like.

The recording medium I/F 404 controls reading and writing of data from and to the recording medium 405 under the control of the CPU 401. The recording medium I/F 404 is, for example, a disk drive, an SSD, a USB port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be attachable to and detachable from the calculation device 201.

The arithmetic housing I/F 406 controls access to the arithmetic housing 407 under the control of the CPU 401. The arithmetic housing I/F 406 transforms an output signal from the CPU 401 into an input signal to the arithmetic housing 407 using a microwave pulse generator, and transmits the input signal to the arithmetic housing 407. The arithmetic housing I/F 406 transforms an output signal from the arithmetic housing 407 into an input signal to the CPU 401 using a microwave pulse demodulator, and transmits the input signal to the CPU 401. The arithmetic housing 407 is an operation device in which one or more qubit chips cooled to a cryogenic temperature of 10 mK are mounted. The qubit chip represents, for example, a logical qubit. The arithmetic housing 407 uses one or more qubit chips to perform a predetermined operation in response to the input signal, and outputs an output signal corresponding to a result of performing the predetermined operation.

The calculation device 201 may include, for example, a keyboard, a mouse, a display, a printer, a scanner, a microphone, a speaker, or the like in addition to the components described above. Furthermore, the calculation device 201 may include a plurality of the recording medium I/Fs 404 and a plurality of recording media 405. Furthermore, the calculation device 201 does not have to include the recording medium I/F 404 and the recording medium 405. Furthermore, the qubit chip in the arithmetic housing 407 may be controlled by a method other than microwaves. The qubit chip in the arithmetic housing 407 may implement, for example, an optical qubit.

(Hardware Configuration Example of Client Device 202)

Since a hardware configuration example of the client device 202 is specifically similar to the hardware configuration example of the information processing device 100 illustrated in FIG. 3, description thereof will be omitted.

(Functional Configuration Example of Information Processing Device 100)

Next, a functional configuration example of the information processing device 100 will be described with reference to FIG. 5.

FIG. 5 is a block diagram illustrating the functional configuration example of the information processing device 100. The information processing device 100 includes a storage unit 500, an acquisition unit 501, a setting unit 502, a determination unit 503, an execution unit 504, and an output unit 505.

The storage unit 500 is implemented by, for example, a storage area such as the memory 302 or the recording medium 305 illustrated in FIG. 3. Hereinafter, a case will be described where the storage unit 500 is included in the information processing device 100. However, the embodiment is not limited to this. For example, there may be a case where the storage unit 500 is included in a device different from the information processing device 100, and the information processing device 100 may refer to a content stored in the storage unit 500.

The acquisition unit 501 to the output unit 505 function as an example of a control unit. Specifically, for example, the acquisition unit 501 to the output unit 505 implement functions thereof by causing the CPU 301 to execute a program stored in the storage area such as the memory 302 or the recording medium 305 illustrated in FIG. 3, or by the network I/F 303. A processing result of each functional unit is stored in, for example, the storage area such as the memory 302 or the recording medium 305 illustrated in FIG. 3.

The storage unit 500 stores various types of information referred to or updated in processing of each functional unit. The storage unit 500 stores, for example, the information related to the target problem. The information related to the target problem includes, for example, the total number n of qubits related to the target problem. The information related to the target problem may include, for example, indices for identifying each qubit of the n qubits related to the target problem, or the like. The information related to the target problem is, for example, acquired by the acquisition unit 501. The information related to the target problem may be, for example, set by a user in advance.

For example, the storage unit 500 stores the number s (s < n) of the plurality of specified Pauli operators that is mutually commutative and independent. The number s of the plurality of specified Pauli operators that is mutually commutative and independent is acquired, for example, by the acquisition unit 501. The number s of the plurality of specified Pauli operators that is mutually commutative and independent may be set, for example, by a user in advance.

The storage unit 500 stores, for example, the number B of specified blocks forming a target commuting block circuit determined by the determination unit 503. The block includes a rotation gate. The block may include, for example, up to $2^s$ rotation gates. The rotation gate has a generator. The generator represents a content of an operation on a qubit. The number B of specified blocks is, for example, acquired by the acquisition unit 501. The number B of specified blocks may be, for example, set by a user in advance.

The storage unit 500 may store a plurality of reference Pauli operators. The plurality of reference Pauli operators is mutually commutative and independent.

Each reference Pauli operator is for the qubit related to the target problem. Specifically, each reference Pauli operator may be a Pauli operator that causes the Z operator or the I operator to act on any one of the qubits. The plurality of reference Pauli operators is, for example, set by the setting unit 502.

The storage unit 500 stores a first Pauli operator set M_S. The first Pauli operator set M_S is a set of the plurality of first Pauli operators S_j. In the first Pauli operator set M_S, the plurality of first Pauli operators S_j is mutually commutative. The first Pauli operator S_j is for the qubit related to the target problem. The first Pauli operator S_j is formed by a product of the plurality of reference Pauli operators. In a case where the target problem relates to the substance having the Pauli symmetry, the first Pauli operator S_j may be, for example, a symmetry operator. The first Pauli operator S_j corresponds to a stabilizer operator S_j to be described later with reference to FIGs. 5 to 11. The first Pauli operator set M_S is acquired, for example, by the acquisition unit 501. The first Pauli operator set M_S may be set, for example, by the setting unit 502.

The storage unit 500 stores a symmetric circuit U that is commutative with all the first Pauli operators S_j of the first Pauli operator set M_S. For example, the symmetric circuit U includes only the first rotation gate including the first generator L_b that is commutative with the first Pauli operator S_j, with respect to each first Pauli operator S_j of the first Pauli operator set M_S. The symmetric circuit U is set, for example, by the setting unit 502.

The acquisition unit 501 acquires various types of information to be used for processing of each functional unit. The acquisition unit 501 stores the acquired various types of information in the storage unit 500, or outputs the acquired various types of information to each functional unit. Furthermore, the acquisition unit 501 may output the various types of information stored in the storage unit 500 to each functional unit. The acquisition unit 501 acquires the various types of information based on, for example, a user's operation input. The acquisition unit 501 may, for example, receive the various types of information from a device different from the information processing device 100.

The acquisition unit 501 acquires, for example, a processing request. The processing request requests, for example, to determine a commuting block circuit to be used when the target problem is solved. The processing request may request, for example, to solve the target problem. The processing request includes, for example, information related to the target problem. Specifically, the acquisition unit 501 acquires the processing request by receiving an input of the processing request. Specifically, the acquisition unit 501 may acquire the processing request by receiving the processing request from another computer. The another computer is, for example, the client device 202 or the like. The acquisition unit 501 acquires the information related to the target problem by extracting the information from the processing request.

The acquisition unit 501 acquires, for example, the first Pauli operator set M_S. Specifically, the acquisition unit 501 acquires the first Pauli operator set M_S by receiving an input of the first Pauli operator set M_S. Specifically, the acquisition unit 501 may acquire the first Pauli operator set M_S by receiving the first Pauli operator set M_S from another computer. The another computer is, for example, the client device 202 or the like. Specifically, in a case where the target problem relates to the substance having the Pauli symmetry, the acquisition unit 501 may acquire the first Pauli operator S_j that is a symmetry operator.

The acquisition unit 501 may receive a start trigger to start processing of any one of the functional units. The start trigger is, for example, a predetermined operation input of a user. The start trigger may be, for example, reception of predetermined information from another computer. The start trigger may be, for example, output of predetermined information by any one of the functional units. For example, the acquisition unit 501 receives acquisition of the processing request as a start trigger to start processing of the setting unit 502 and the determination unit 503.

For example, the setting unit 502 may acquire the first Pauli operator set M_S, by setting the first Pauli operator set M_S, based on the number s of the plurality of specified Pauli operators that is mutually commutative and independent. Specifically, the setting unit 502 sets $2^s$ first Pauli operator sets M_S formed by a product of s reference Pauli operators that are mutually commutative and independent, for the qubit related to the target problem. As a result, the setting unit 502 may prepare the first Pauli operator set M_S serving as a guideline for determining the second generator included in the second rotation gate included in the block forming the commuting block circuit.

For example, the setting unit 502 acquires the symmetric circuit U, by setting the symmetric circuit U, based on the first Pauli operator set M_S. Specifically, the setting unit 502 sets the symmetric circuit U, so as to include only the first rotation gate including the first generator L_b that is commutative with the first Pauli operator S_j, with respect to each first Pauli operator S_j of the first Pauli operator set M_S. As a result, the setting unit 502 may prepare the symmetric circuit U serving as a guideline for determining the second generator included in the rotation gate included in the block forming the commuting block circuit.

The determination unit 503 determines the commuting block circuit, based on the acquired first Pauli operator set M_S and the acquired symmetric circuit U. For example, the determination unit 503 selects any one first Pauli operator S_j, of the first Pauli operator set M_S, for each second rotation gate, with respect to each second rotation gate included in each block. For example, the determination unit 503 selects the first generator L_b included in any one first rotation gate, in the symmetric circuit U, for each block, for each block of the B blocks. For example, the determination unit 503 determines the second generator $G\_j^b$ formed by the product of the first Pauli operator $S\_j$ selected for each second rotation gate and a second Pauli operator $L\_b$ selected for each block, with respect to each second rotation gate included in each block. For example, the determination unit 503 determines the commuting block circuit so that each second rotation gate included in each block has the determined second generator $G\_j^b$.

Specifically, the determination unit 503 selects any one of the first Pauli operators $S\_j$ different for each second rotation gate, of the first Pauli operator set $M\_S$, with respect to each second rotation gate included in each block. Specifically, the determination unit 503 selects the first generator $L\_b$ included in any one first rotation gate different for each block, of the symmetric circuit U, for each block of the B blocks. For example, the determination unit 503 determines the second generator $G\_j^b$ formed by the product of the first Pauli operator $S\_j$ selected for each second rotation gate and a second Pauli operator $L\_b$ selected for each block, with respect to each second rotation gate included in each block. For example, the determination unit 503 determines the commuting block circuit so that each second rotation gate included in each block has the determined second generator $G\_j^b$.

More specifically, the determination unit 503 selects any one of the first Pauli operators $S\_j$ having the same order as the second rotation gate, of the first Pauli operator set $M\_S$, with respect to each second rotation gate included in each block. Specifically, the determination unit 503 selects the first generator $L\_b$ included in any one first rotation gate having the same order as the block, of the symmetric circuit U, for each block of the B blocks. For example, the determination unit 503 determines the second generator $G\_j^b$ formed by the product of the first Pauli operator $S\_j$ selected for each second rotation gate and a second Pauli operator $L\_b$ selected for each block, with respect to each second rotation gate included in each block. For example, the determination unit 503 determines the commuting block circuit so that each second rotation gate included in each block has the determined second generator $G\_j^b$. As a result, the determination unit 503 may appropriately determine the second generator included in the second rotation gate included in each block so as to satisfy the first condition and the second condition described above, and may appropriately determine the specific content of the commuting block circuit.

The execution unit 504 executes the variational method based on the commuting block circuit determined by the determination unit 503. For example, the execution unit 504 sets the commuting block circuit determined by the determination unit 503 as a variational quantum circuit. For example, the execution unit 504 sets a parameter of each second rotation gate of each block of the commuting block circuit set to the variational quantum circuit, as the variational parameter. For example, the execution unit 504 randomly initializes the variational parameter. For example, the execution unit 504 repeatedly executes series of processing for executing the variational quantum circuit, measuring the gradient of the cost function, and updating the variational parameter based on the gradient of the cost function, until an end condition is satisfied. The end condition is, for example, that a value of the cost function converges. The end condition may be, for example, that the number of times of repeatedly executing the series of processing is equal to or more than a certain number. As a result, the execution unit 504 can optimize the variational parameter. The execution unit 504 can obtain a solution of the target problem, based on the optimized variational parameter.

The output unit 505 outputs a processing result of at least any one of the functional units. Examples of an output format include display on a display, print output to a printer, transmission to an external device by the network I/F 303, or storage in the storage area such as the memory 302, the recording medium 305, or the like. As a result, the output unit 505 may notify a user of the processing result of at least any one of the functional units to improve convenience of the information processing device 100.

The output unit 505 outputs, for example, the commuting block circuit determined by the determination unit 503. Specifically, the output unit 505 transmits the commuting block circuit determined by the determination unit 503 to another computer. The another computer is, for example, the calculation device 201 or the like. Specifically, the output unit 505 may output the commuting block circuit determined by the determination unit 503, so that a user may refer to the commuting block circuit. As a result, the output unit 505 may enable external implementation of the commuting block circuit.

(Operation Example of Information Processing Device 100)

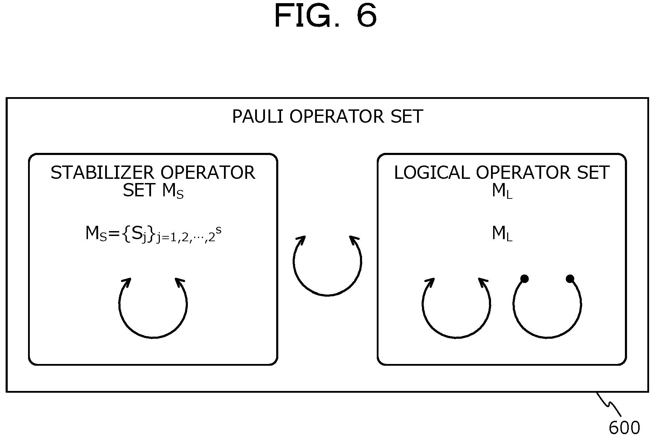

Next, an operation example of the information processing device 100 will be described with reference to FIGs. 6 to 11. First, a principle of determining a commuting block circuit that satisfies various conditions will be described, with reference to FIG. 6. The various conditions are the first condition and the second condition described above.

FIG. 6 is an explanatory diagram illustrating the principle of determining the commuting block circuit. As illustrated in FIG. 6, as a subset of a Pauli operator set 600, it is assumed that a stabilizer operator set $M\_S$ and a logical operator set $M\_L$ exist.

The stabilizer operator set $M\_S$ includes $2^s$ stabilizer operators $S\_j$ ($j = 1, 2, ..., 2^s$) each formed by a product of commutative and independent s Pauli operators. The reference j indicates an index. As indicated in the following formula (7), in the stabilizer operator set $M\_S$, the $2^s$ stabilizer operators $S\_j$ are mutually commutative. Furthermore, the number of stabilizer operators $S\_j$ may be, for example, less than $2^s$.

[Expression 7]

$$[S_i, S_j] = 0 \quad ...(7)$$

The logical operator set M_L includes a plurality of logical operators L_b. The reference b indicates an index. As indicated in the following formula (8), the logical operator L_b is commutative with all the stabilizer operators $S\_j$ of the stabilizer operator set M_S. In the logical operator set M_L, the plurality of logical operators L_b is mutually commutative or anticommutative.

[Expression 8]

$$[S_j, L_b] = 0 \quad ...(8)$$

If such a stabilizer operator set M_S and a logical operator set M_L exist, the commuting block circuit can be appropriately determined so as to satisfy various conditions. For example, if the information processing device 100 determines a generator included in a j-th rotation gate of the b-th block as $G\_j^b$ indicated by the following formula (9), it is possible to appropriately determine the commuting block circuit so as to satisfy various conditions. Specifically, it is sufficient for the information processing device 100 to determine the generator included in the j-th rotation gate of the b-th block as a product of a j-th stabilizer operator $S\_j$ of the stabilizer operator set M_S and a b-th logical operator L_b of the logical operator set M_L.

[Expression 9]

$$G_j^b = S_j L_b \quad ...(9)$$

The various conditions are the first condition and the second condition. The first condition is defined by the following formula (10). The first condition indicates that generators included in the respective rotation gates of the plurality of rotation gates included in each block forming the commuting block circuit are all commutative.

The second condition is defined by the following formulas (11) and (12). The second condition indicates that generators included in the rotation gates included in the different blocks forming the commuting block circuit are mutually commutative or anticommutative. Specifically, when the logical operator L_b and a logical operator L_c are commutative, the following formula (11) holds. Furthermore, when the logical operator L_b and the logical operator L_c are anticommutative, the following formula (12) holds.

[Expression 10]

$$\left[G_j^b, G_{j'}^b\right] = \left[L_b S_j, L_b S_{j'}\right] = 0 \quad ...(10)$$

[Expression 11]

$$\left[G_j^b, G_{j'}^c\right] = \left[L_b S_j, L_c S_{j'}\right] = 0 \quad ...(11)$$

[Expression 12]

$$\{G_j^b, G_{j'}^c\} = \{L_b S_j, L_c S_{j'}\} = 0 \quad ...(12)$$

As a result, the information processing device 100 may include up to $2^s$ rotation gates in one block. Thus, the information processing device 100 may determine each block forming the commuting block circuit such that differentials for up to $2^s$ parameters may be simultaneously measured by two types of quantum circuits each including the base transformation circuit. Therefore, if the information processing device 100 appropriately sets the stabilizer operator set M_S and the logical operator set M_L, the commuting block circuit can be appropriately determined.

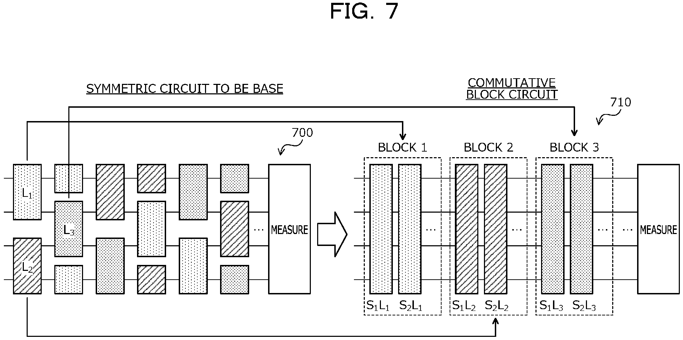

Next, with reference to FIGs. 7 to 9, how the information processing device 100 sets the stabilizer operator set M_S and the logical operator set M_L will be described, and an example of determining a commuting block circuit 710 will be described. In the example in FIG. 7, it is assumed that the total number of qubits be n.

FIG. 7 is an explanatory diagram illustrating an example of determining the commuting block circuit 710. In FIG. 7, the information processing device 100 sets the stabilizer operator $S\_j$ formed by a product of s Pauli operators that are commutative and independent, according to the target problem and sets the stabilizer operator set M_S that is a set of the stabilizer operators $S\_j$.

For example, there are the $2^s$ stabilizer operators $S\_j$. For example, in a case where the target problem is a problem related to the substance having the Pauli symmetry, there may be a case where the information processing device 100 sets the symmetry operator as the stabilizer operator $S\_j$. In this case, the number of stabilizer operators $S\_j$ may be, for example, less than $2^s$.

The information processing device 100 generates a symmetric circuit 700 that is commutative with all the stabilizer operators $S\_j$, to set the logical operator set M_L that is the set of the logical operators L_b. The symmetric circuit 700 includes only a rotation gate including a generator L_b that is commutative with the stabilizer operator $S\_j$. The symmetric circuit 700 is defined by the following formulas (13) and (14).

[Expression 13]

$$U = \prod_{b=1}^{D} e^{i\theta_b L_b} \quad ...(13)$$

[Expression 14]

$$\left[L_b, S_j\right] = 0 \quad \forall b, j \quad ...(14)$$

For example, the information processing device 100 sets the logical operator set M_L that is the set of the logical operators L_b, by setting the generator L_b included in any one rotation gate of the symmetric circuit 700 as the logical operator L_b. As a result, the information processing device 100 can set the stabilizer operator set M_S and the logical operator set M_L to determine the commuting block circuit 710 and can determine the commuting block circuit 710.

The information processing device 100 determines the generator G_j^b that is the product of the j-th first Pauli operator S_j of the first Pauli operator set M_S and the generator L_b included in the b-th rotation gate of the symmetric circuit 700, for the j-th rotation gate of the b-th block. The information processing device 100 determines the commuting block circuit 710 so that the generator included in the j-th rotation gate of the b-th block is the determined generator G_j^b.

As illustrated in FIG. 7, for example, the information processing device 100 determines a first block 1, so that a j-th rotation gate of the first block 1 has a generator G_j^1 that is a product of the j-th first Pauli operator S_j and a generator L_1 included in a first rotation gate. For example, the information processing device 100 determines a second block 1, so that a j-th rotation gate of the second block 2 has a generator G_j^2 that is a product of the j-th first Pauli operator S_j and a generator L_2 included in a second rotation gate.

For example, the information processing device 100 determines a third block 1, so that a j-th rotation gate of the third block 3 has a generator G_j^3 that is a product of the j-th first Pauli operator S_j and a generator L_3 included in a third rotation gate. Similarly, the information processing device 100 determines fourth and subsequent blocks b. The information processing device 100 determines the commuting block circuit 710 by coupling the determined blocks b. As a result, the information processing device 100 may appropriately determine the commuting block circuit so as to satisfy the first condition and the second condition. The commuting block circuit is defined by the following formulas (15) to (18).

[Expression 15]

$$U' = \prod_{b=1}^{D} \left( \prod_{j=1}^{2^s} e^{i\theta_{bj} S_j L_b} \right) \quad ...(15)$$

[Expression 16]

$$\left[S_j L_b, S_{j'} L_b\right] = 0 \quad ...(16)$$

[Expression 17]

$$\left[S_j L_b, S_{j'} L_{b'}\right] = 0 \quad \forall j, j' \quad ...(17)$$

[Expression 18]

$$\left\{S_j L_b, S_{j'} L_{b'}\right\} = 0 \quad \forall j, j' \quad ...(18)$$

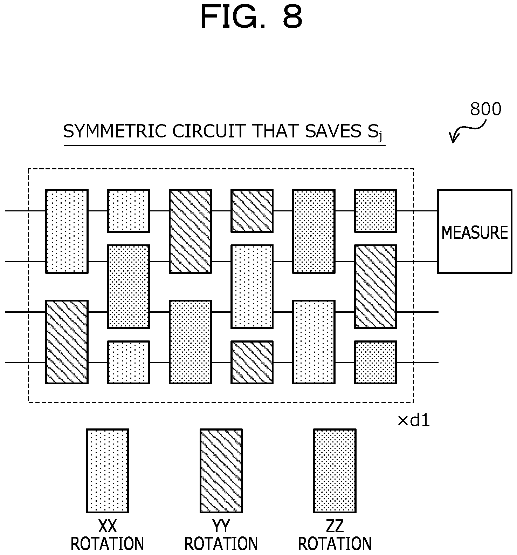

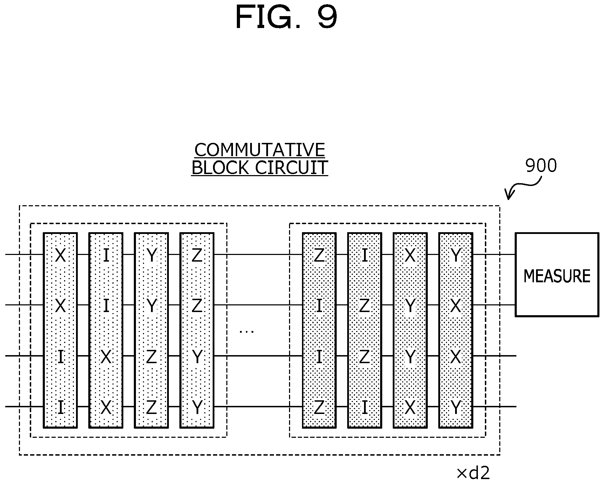

Next, a specific example in which the information processing device 100 determines a commuting block circuit 900 will be described with reference to FIGs. 8 and 9. In the examples in FIGs. 8 and 9, it is assumed that the total number of qubits be four. Furthermore, it is assumed that the target problem is the problem related to the substance having the Pauli symmetry. Furthermore, it is assumed that a physical quantity P to be measured = XXII.

FIGs. 8 and 9 are explanatory diagrams illustrating a specific example of determining the commuting block circuit 900. In FIG. 8, the information processing device 100 sets S_1 = IIII, S_2 = XXXX, S_3 = YYYY, and S_4 = ZZZZ, each of which is a symmetry operator, as the stabilizer operators S_j and sets the stabilizer operator set M_S. The information processing device 100 generates a symmetric circuit 800, based on the stabilizer operator set M_S.

The symmetric circuit 800 includes 12 × d1 rotation gates. Here, in a case where a differential regarding each parameter is measured using the symmetric circuit 800, the differential regarding each parameter is measured for each parameter. Therefore, in a case where the differential regarding each parameter is measured using the symmetric circuit 800, the number of quantum circuits prepared when the gradient of the cost function is measured is 12 × d1. Therefore, the gradient measurement efficiency = the number of parameters/the number of quantum circuits prepared when the gradient of the cost function is measured = 1. Here, description of FIG. 9 will be made.

In FIG. 9, the information processing device 100 determines the commuting block circuit 900, with reference to the symmetric circuit 800. The commuting block circuit 900 includes 48 × d2 rotation gates. Here, in a case where the differential regarding each parameter is measured using the commuting block circuit 900, the differential regarding the parameter is measured, for each block. Therefore, in a case where the differential regarding each parameter is measured, using the commuting block circuit 900, the number of quantum circuits prepared when the gradient of the cost function is measured is 12 × d2. Therefore, the gradient measurement efficiency = the number of parameters/the number of quantum circuits prepared when the gradient of the cost function is measured = 4. In this way, the information processing device 100 can quadruple the gradient measurement efficiency, by determining the commuting block circuit 900.

(Example of Effect by Information Processing Device 100)

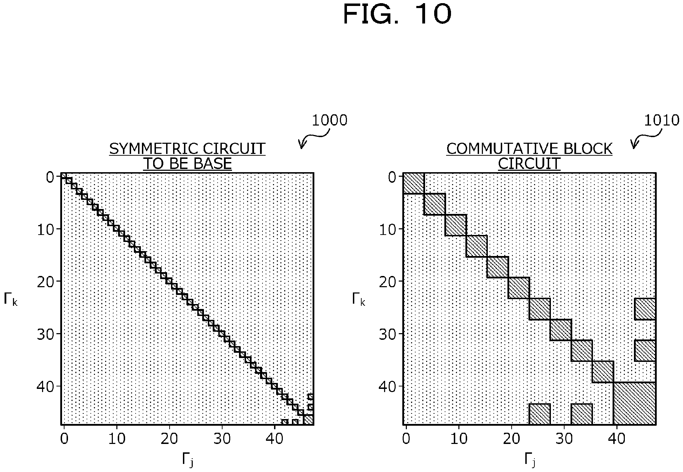

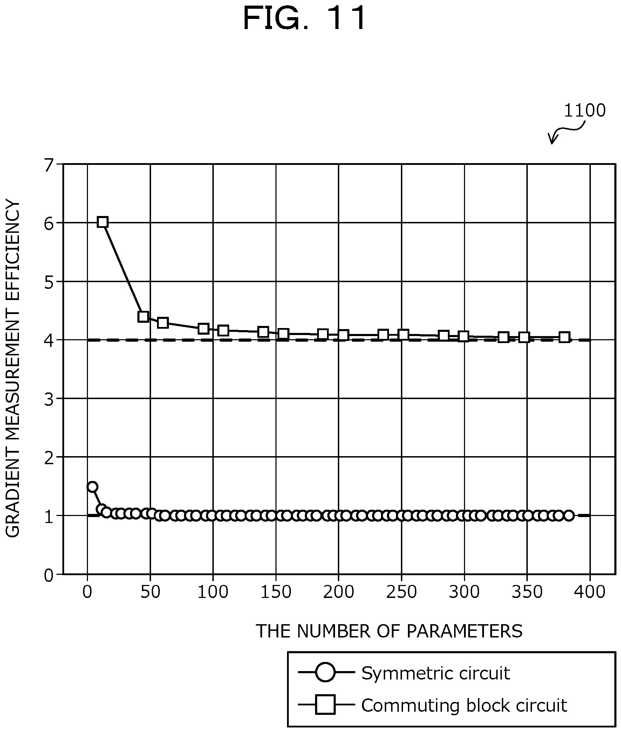

Next, an example of an effect by the information processing device 100 will be described with reference to FIGs. 10 and 11.

FIGs. 10 and 11 are explanatory diagrams illustrating an example of the effect by the information processing device 100. In the examples in FIGs. 10 and 11, a variational quantum circuit model U is defined by the following formula (19). A cost function C is defined by the following formula (20). Regarding the cost function C, the following formulas (21) to (25) hold.

[Expression 19]

$$U = \prod_{b=1}^{D} e^{i\theta_b L_b} \quad ...(19)$$

[Expression 20]

$$C = Tr[U\rho U^\dagger P] \quad ...(20)$$

[Expression 21]

$$\frac{\partial C}{\partial \theta_b} = -iTr[\rho \Gamma_b] \quad ...(21)$$

[Expression 22]

$$\Gamma_b = [\breve{L}_b, \tilde{P}] \quad ...(22)$$

[Expression 23]

$$\tilde{L}_b = U_{b+}^\dagger L_b U_{b+}, \quad ...(23)$$

[Expression 24]

$$U_{b+} = \prod_{j=1}^{b-1} e^{i\theta_j L_j} \quad ...(24)$$

[Expression 25]

$$\tilde{P} = U^\dagger P U \quad ...(25)$$

In FIG. 10, it is assumed that the number of parameters be 48. A graph 1000 in FIG. 10 indicates whether or not to exchange Γ_j and Γ_k for a symmetric circuit. Specifically, a case where Γ_j and Γ_k are not commutative is indicated by stippled hatching. A case where Γ_j and Γ_k are commutative is indicated by hatching. On the other hand, a graph 1010 in FIG. 10 illustrates whether or not to exchange Γ_j and Γ_k, for a commuting block circuit. Specifically, a case where Γ_j and Γ_k are not commutative is indicated by stippled hatching. A case where Γ_j and Γ_k are commutative is indicated by hatching. In a case where Γ_j and Γ_k are commutative, a j-th component and a k-th component of a gradient can be simultaneously measured.

As illustrated in FIG. 10, regarding the symmetric circuit, Γ_j tends not to be commutative with anything other than Γ_j itself. On the other hand, regarding the commuting block circuit, Γ_j tends to be commutative with Γ_k in a shape of 4 × 4 blocks. In this way, it is indicated that the gradient measurement efficiency is quadrupled, according to the commuting block circuit. Next, description of FIG. 11 will be made.

A graph 1100 in FIG. 11 indicates gradient measurement efficiencies for different numbers of parameters. As indicated in the graph 1100, when the number of parameters increases, the gradient measurement efficiency regarding the symmetric circuit asymptotically approaches one. Furthermore, when the number of parameters increases, the gradient measurement efficiency regarding the commuting block circuit asymptotically approaches four. In this way, it is indicated that the gradient measurement efficiency is quadrupled, according to the commuting block circuit.

As described above, the information processing device 100 may determine a commuting block circuit that enables efficient gradient measurement. In the commuting block circuit, the information processing device 100 may enable simultaneous measurement of differentials related to up to 2^s parameters by two types of quantum circuits each including the base transformation circuit. Therefore, the information processing device 100 may reduce the processing cost at the time of the optimization of the parameter in order to solve the target problem, and may facilitate solving of the target problem within the practical time. The processing cost is a processing load, a processing time, a memory usage, or the like.

(Overall Processing Procedure)

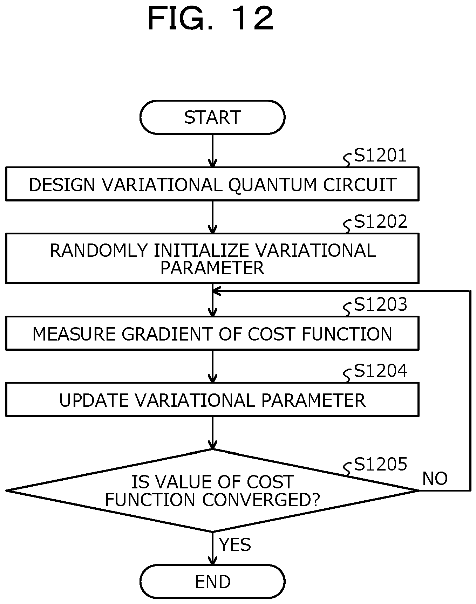

Next, an example of an overall processing procedure executed by the information processing device 100 will be described with reference to FIG. 12. Overall processing is implemented by, for example, the CPU 301, the storage area such as the memory 302 or the recording medium 305, and the network I/F 303 illustrated in FIG. 3.

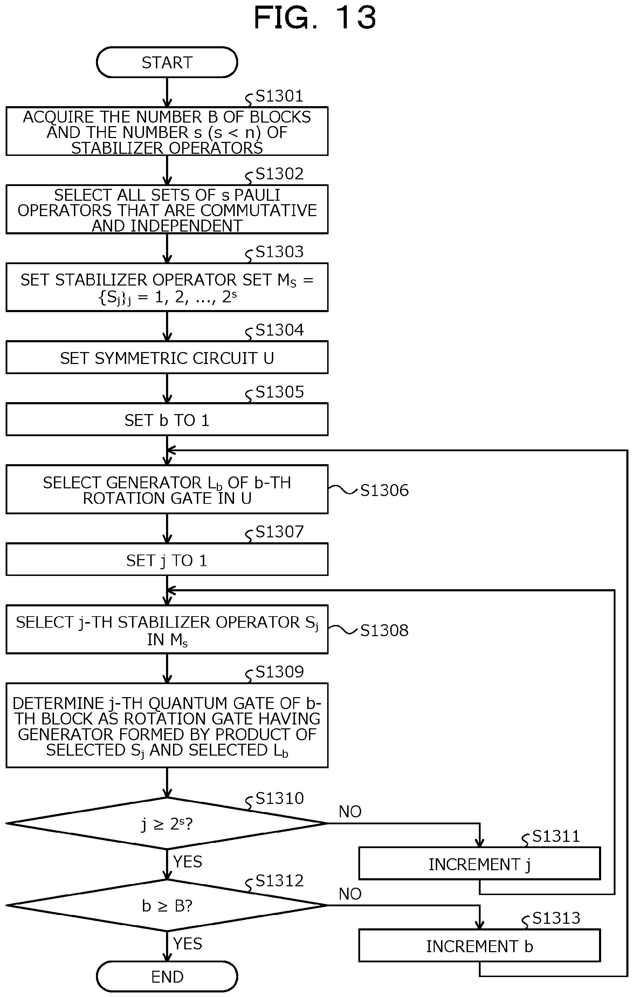

FIG. 12 is a flowchart illustrating an example of the overall processing procedure. In FIG. 12, the information processing device 100 designs the variational quantum circuit, by executing design processing to be described later with reference to FIG. 13 (step S1201). The information processing device 100 randomly initializes the variational parameter (step S1202). The information processing device 100 measures the gradient of the cost function (step S1203).

The information processing device 100 updates the variational parameter (step S1204). The information processing device 100 determines whether or not the value of the cost function is converged (step S1205). Here, in a case where the value of the cost function is not converged (step S1205: No), the information processing device 100 returns to the processing of step S1203. On the other hand, in a case where the value of the cost function is converged

(step S1205: Yes), the information processing device 100 ends the overall processing.

(Design Processing Procedure)

Next, an example of a design processing procedure executed by the information processing device 100 will be described with reference to FIG. 13. Design processing is implemented by, for example, the CPU 301, the storage area such as the memory 302 or the recording medium 305, and the network I/F 303 illustrated in FIG. 3.

FIG. 13 is a flowchart illustrating an example of the design processing procedure. In FIG. 13, the information processing device 100 acquires the number B of blocks and the number s (s < n) of stabilizer operators (step S1301). The information processing device 100 selects all sets of the s Pauli operators that are commutative and independent (step S1302).

The information processing device 100 sets $2^s$ stabilizer operators $S_j$ formed by a product of the selected sets of the s Pauli operators different from each other, and sets the stabilizer operator set $M\_S = \{S\_j\}\_j =$ 1, 2, ..., $2^s$ (step S1303). The information processing device 100 sets the symmetric circuit U that is commutative with all the stabilizer operators $S_j$ in $M\_S$ (step S1304).

The information processing device 100 sets b to 1 (step S1305). The information processing device 100 selects the generator $L\_b$ of the b-th rotation gate in the symmetric circuit U (step S1306). The information processing device 100 sets j to 1 (step S1307).

The information processing device 100 selects the j-th stabilizer operator $S\_j$ in $M\_s$ (step S1308). The information processing device 100 determines the j-th quantum gate of the b-th block as a rotation gate having a generator formed by a product of the selected $S\_j$ and the selected $L\_b$ (step S1309).

The information processing device 100 determines whether or not $j \geq 2^s$ holds (step S1310). Here, in a case where $j \geq 2^s$ does not hold (step S1310: No), the information processing device 100 increments j (step S1311), and returns to the processing of step S1308. On the other hand, in a case where $j \geq 2^s$ holds (step S1310: Yes), the information processing device 100 proceeds to processing of step S1312.

In step S1312, the information processing device 100 determines whether or not $b \geq B$ holds (step S1312). Here, in a case where $b \geq B$ does not hold (step S1312: No), the information processing device 100 increments b (step S1313), and returns to the processing of step S1306. On the other hand, in a case where $b \geq B$ holds (step S1312: Yes), the information processing device 100 ends the design processing. As a result, the information processing device 100 can appropriately design the commuting block circuit to be the variational quantum circuit, so as to satisfy the first condition described above and the second condition described above.

As described above, according to the information processing device 100, it is possible to acquire the first Pauli operator set that is the set of the first Pauli operators formed by the product of the plurality of Pauli operators that is mutually commutative and independent. According to the information processing device 100, it is possible to generate the symmetric circuit that includes only the first rotation gate including the first generator that is commutative with the first Pauli operator and is commutative with all the first Pauli operators of the first Pauli operator set, for each first Pauli operator. According to the information processing device 100, it is possible to select the first generator included in any one first rotation gate, in the symmetric circuit, with respect to each block of the specified number of multiple blocks. According to the information processing device 100, it is possible to select any one first Pauli operator, of the first Pauli operator set, for each second rotation gate included in each block of the specified number of multiple blocks. According to the information processing device 100, it is possible to determine the second generator formed by the product of the selected first Pauli operator and the first generator included in the selected first rotation gate, for each second rotation gate included in each block. According to the information processing device 100, it is possible to determine the commuting block circuit formed by the plurality of blocks, so that each second rotation gate included in each block includes the determined second generator. As a result, the information processing device 100 may appropriately determine the commuting block circuit so as to satisfy the first condition described above and the second condition described above. The information processing device 100 may enable implementation of the commuting block circuit.

According to the information processing device 100, it is possible to select the first Pauli operator different for each second rotation gate, for each block. According to the information processing device 100, it is possible to determine the second generator formed by the product of the selected first Pauli operator and the first generator included in the selected first rotation gate, for each second rotation gate included in each block. As a result, the information processing device 100 can appropriately determine the second generator of the second rotation gate.

According to the information processing device 100, it is possible to select the first Pauli operator having the same order as the second rotation gate, of the first Pauli operator set, for each second rotation gate included in each block. According to the information processing device 100, it is possible to select the first generator included in any one first rotation gate having the same order as the block, in the symmetric circuit, for each block. As a result, the information processing device 100 can appropriately determine the second generator of the second rotation gate.

According to the information processing device 100, in a case where the target problem relates to the substance having the Pauli symmetry, it is possible to set the symmetry operator as the first Pauli operator. As a result, the information processing device 100 can use the appropriate first Pauli operator according to the target problem.

Note that the information processing method described in the present embodiment can be implemented by executing a program prepared in advance in a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the information processing program described in the present embodiment may be distributed via a network such as the Internet.

**Claims**

1. An information processing program for causing a computer to execute processing comprising:

   acquiring a first Pauli operator set that is a set of first Pauli operators formed by a product of a plurality of Pauli operators that is mutually commutative and independent, for a qubit related to a target problem;

   generating a symmetric circuit that includes only a first rotation gate that includes a first generator that is commutative with the first Pauli operator, regarding each first Pauli operator of the first Pauli operator set and is commutative with all the first Pauli operators of the first Pauli operator set; and

   determining a commuting block circuit that is formed by a plurality of blocks so that each second rotation gate of a plurality of second rotation gates included in each block of the specified number of multiple blocks includes a second generator formed by a product of any one of the first Pauli operators of the acquired first Pauli operator set and the first generator included in the any one first rotation gate selected for each block, in the generated symmetric circuit.

2. The information processing program according to claim 1, wherein the determining processing determines the commuting block circuit, so that each second rotation gate included in each block includes a second generator formed by a product of any one first Pauli operator, different for each second rotation gate, of the first Pauli operator set and the first generator included in the any one first rotation gate selected for each block in the symmetric circuit.

3. The information processing program according to claim 1 or claim 2, wherein

   the determining processing
   determines the commuting block circuit, so that each second rotation gate included in each block includes a second generator formed by a product of any one first Pauli operator that has a same order as the second rotation gate, of the first Pauli operator set and a first generator included in any one first rotation gate that has a same order as the block, in the symmetric circuit.

4. The information processing program according to any one of claims 1 to 3, wherein in a case where the problem relates to a substance that has Pauli symmetry, the first Pauli operator is a symmetry operator.

5. The information processing program according to any one of claims 1 to 4, for causing the computer to execute processing comprising:
   repeatedly executing a series of processing of measuring a gradient of a cost function that corresponds to the problem, by executing the commuting block circuit after initializing a parameter of each second rotation gate of each block of the determined commuting block circuit and updating the parameter, based on the measured gradient, until an end condition is satisfied.

6. An information processing method implemented by a computer, the information processing method comprising:

acquiring a first Pauli operator set that is a set of first Pauli operators formed by a product of a plurality of Pauli operators that is mutually commutative and independent, for a qubit related to a target problem;

generating a symmetric circuit that includes only a first rotation gate that includes a first generator that is commutative with the first Pauli operator, regarding each first Pauli operator of the first Pauli operator set and is commutative with all the first Pauli operators of the first Pauli operator set; and

determining a commuting block circuit that is formed by a plurality of blocks so that each second rotation gate of a plurality of second rotation gates included in each block of the specified number of multiple blocks includes a second generator formed by a product of any one of the first Pauli operators of the acquired first Pauli operator set and the first generator included in the any one first rotation gate selected for each block, in the generated symmetric circuit.

7. An information processing device comprising:

a control unit configured to
acquire a first Pauli operator set that is a set of first Pauli operators formed by a product of a plurality of Pauli operators that is mutually commutative and independent, for a qubit related to a target problem,

generate a symmetric circuit that includes only a first rotation gate that includes a first generator that is commutative with the first Pauli operator, regarding each first Pauli operator of the first Pauli operator set and is commutative with all the first Pauli operators of the first Pauli operator set, and

determine a commuting block circuit that is formed by a plurality of blocks so that each second rotation gate of a plurality of second rotation gates included in each block of the specified number of multiple blocks includes a second generator formed by a product of any one of the first Pauli operators of the acquired first Pauli operator set and the first generator included in the any one first rotation gate selected for each block, in the generated symmetric circuit.

FIG. 1

# FIG. 2

EP 4 641 451 A1

# FIG. 3

19

# FIG. 4

# FIG. 5

500

STORAGE UNIT

100

| 501 | 502 | 503 | 504 | 505 |
|---|---|---|---|---|
| ACQUISITION UNIT | SETTING UNIT | DETERMINATION UNIT | EXECUTION UNIT | OUTPUT UNIT |

# FIG. 6

PAULI OPERATOR SET

STABILIZER OPERATOR
SET $M_S$

$M_S = \{S_j\}_{j=1,2,\cdots,2^S}$

LOGICAL OPERATOR SET
$M_L$

$M_L$

600

# FIG. 7

# FIG. 8

SYMMETRIC CIRCUIT THAT SAVES $S_j$

×d1

MEASURE

XX
ROTATION

YY
ROTATION

ZZ
ROTATION

# FIG. 9

COMMUTATIVE
BLOCK CIRCUIT

900

MEASURE

×d2

# FIG. 10

SYMMETRIC CIRCUIT
TO BE BASE — 1000

COMMUTATIVE BLOCK
CIRCUIT — 1010

# FIG. 11

# FIG. 12

```
                    ┌─────────────┐
                    │    START    │
                    └──────┬──────┘
                           │            ⌇S1201
          ┌────────────────▼────────────────────┐
          │ DESIGN VARIATIONAL QUANTUM CIRCUIT   │
          └────────────────┬────────────────────┘
                           │            ⌇S1202
          ┌────────────────▼────────────────────┐
          │   RANDOMLY INITIALIZE VARIATIONAL    │
          │             PARAMETER                │
          └────────────────┬────────────────────┘
                           │            ⌇S1203
          ┌────────────────▼────────────────────┐
          │  MEASURE GRADIENT OF COST FUNCTION   │
          └────────────────┬────────────────────┘
                           │            ⌇S1204
          ┌────────────────▼────────────────────┐
          │      UPDATE VARIATIONAL PARAMETER    │
          └────────────────┬────────────────────┘
                           │
                    ◇──────▼──────◇   ⌇S1205
                   ╱  IS VALUE OF  ╲        NO
                  ╱ COST FUNCTION   ╲───────────
                  ╲  CONVERGED?     ╱
                   ╲───────┬───────╱
                           │ YES
                    ┌──────▼──────┐
                    │     END     │
                    └─────────────┘
```

# FIG. 13

START

⌐S1301
ACQUIRE THE NUMBER B OF BLOCKS AND THE NUMBER s (s < n) OF STABILIZER OPERATORS

⌐S1302
SELECT ALL SETS OF s PAULI OPERATORS THAT ARE COMMUTATIVE AND INDEPENDENT

⌐S1303
SET STABILIZER OPERATOR SET $M_S = \{S_j\}_j = 1, 2, ..., 2^s$

⌐S1304
SET SYMMETRIC CIRCUIT U

⌐S1305
SET b TO 1

S1306
SELECT GENERATOR $L_b$ OF b-TH ROTATION GATE IN U

⌐S1307
SET j TO 1

S1308
SELECT j-TH STABILIZER OPERATOR $S_j$ IN $M_s$

⌐S1309
DETERMINE j-TH QUANTUM GATE OF b-TH BLOCK AS ROTATION GATE HAVING GENERATOR FORMED BY PRODUCT OF SELECTED $S_j$ AND SELECTED $L_b$

⌐S1310
$j \geq 2^s$?

NO → ⌐S1311 INCREMENT j

YES

⌐S1312
$b \geq B$?

NO → ⌐S1313 INCREMENT b

YES

END

Europäisches
Patentamt

European
Patent Office

Office européen
des brevets

# EUROPEAN SEARCH REPORT

**Application Number**

EP 25 15 7165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Van Den Berg ET AL: "Circuit optimization of Hamiltonian simulation by simultaneous diagonalization of Pauli clusters", ,<br>5 September 2020 (2020-09-05), XP093290340, Retrieved from the Internet: URL:https://arxiv.org/pdf/2003.13599 [retrieved on 2025-06-26]<br>* abstract *<br>* page 1 - page 26 * | 1-7 | INV.<br>G06N10/20<br>G06N10/60 |
| A | GARD BRYAN T. ET AL: "Efficient symmetry-preserving state preparation circuits for the variational quantum eigensolver algorithm", ARXIV:1501.02813, [Online] vol. 6, no. 1, 15 January 2020 (2020-01-15), XP093290342, ISSN: 2056-6387, DOI: 10.1038/s41534-019-0240-1 Retrieved from the Internet: URL:https://arxiv.org/pdf/1904.10910> [retrieved on 2025-06-26]<br>* the whole document * | 1-7 | |

**TECHNICAL FIELDS SEARCHED (IPC)**

G06N

The present search report has been drawn up for all claims

| Place of search | Date of completion of the search | Examiner |
|---|---|---|
| The Hague | 30 June 2025 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023243011 A
- WO 2023175703 A
- WO 2023148806 A

- US 20240037304
- US 20230237361
- US 20200364602

**Non-patent literature cited in the description**

- **BOWLES** ; **JOSEPH** ; **DAVID WIERICHS** ; **CHAE-YEUN PARK**. Backpropagation scaling in parameterised quantum circuits. *arXiv preprint arXiv:2306.14962*, 2023

- **GARD, BRYAN T. et al.** Efficient symmetry-preserving state preparation circuits for the variational quantum eigensolver algorithm. *npj Quantum Information*, 2020, vol. 6 (1), 10